# EUROPÄISCHE PATENTSCHRIFT

(11) **EP 3 443 631 B1**
(45) Veröffentlichungstag und Bekanntmachung des Hinweises auf die Patenterteilung: **26.02.2020**
(21) Anmeldenummer: 18712560.4
(22) Anmeldetag: 19.03.2018
(51) Int. Cl.: H02H 9/04, H02H 7/24, H01C 7/12

(54) **ABTRENN- UND UMSCHALTVORRICHTUNG FÜR DEN ÜBERSPANNUNGSSCHUTZ, INSBESONDERE FÜR DC-SYSTEME**
DISCONNECTION AND SWITCH-OVER DEVICE FOR OVERVOLTAGE PROTECTION, PARTICULARLY FOR DC SYSTEMS
DISPOSITIF DE DÉCONNEXION ET DE COMMUTATION POUR LA PROTECTION CONTRE LES SURTENSIONS, EN PARTICULIER POUR SYSTÈMES CC

(30) Priorität: 11.04.2017 DE 102017107871
(43) Veröffentlichungstag der Anmeldung: 20.02.2019
(73) Patentinhaber: DEHN SE + Co KG, 92318 Neumarkt / Opf. (DE)
(72) Erfinder: LI, Hongjun (Better), Shanghai 201109 (CN); XU, Niansheng (Jack), Shanghai 201199 (CN); CHEN, Weie, Shanghai 201101 (CN)
(74) Vertreter: Kruspig, Volkmar
(86) Internationale Anmeldenummer: PCT/EP2018/056784
(87) Internationale Veröffentlichungsnummer: WO 2018/188897

(56) Entgegenhaltungen:
- WO-A1-2014/131564
- GB-A- 1 060 964
- JP-A- 2014 155 340
- US-A1- 2005 280 971
- US-A1- 2014 292 472

## Beschreibung

Die Erfindung betrifft eine Abtrenn- und Umschaltvorrichtung für den Überspannungsschutz, insbesondere für DC-Systeme mit mindestens einem Ableitelement, weiterhin einer thermischen Abtrennstelle, die in den elektrischen Anschlusspfad des Ableitelementes eingebunden ist, wobei die thermische Abtrennstelle ein bewegliches Leiterelement umfasst, welches unter einer mechanischen Vorspannung steht und sich im Abtrennfall von einer ersten Position in eine zweite Position bewegt, wobei mit Erreichen der zweiten Position eine elektrische Umschaltung auf eine Sicherung bewirkt ist, die thermische Abtrennstelle durch das bewegliche Leiterelement und ein festes Kontaktelement gebildet ist, wobei das bewegliche Leiterelement am festen Kontaktelement durch ein thermisch auslösbares Mittel fixiert ist gemäß Patentanspruch 1.

Aus der EP 0 860 927 A1 ist eine elektromechanische Einrichtung vorbekannt, die den Strom über einen Varistor überwacht und welche nach Überschreiten eines vorgegebenen Grenzwertes den Kurzschluss im Bypass zum Varistorpfad über elektromechanische Kontakte schaltet.

Die DE 37 34 214 C2 offenbart eine thermisch auslösbare Abtrennvorrichtung, deren schaltendes Element einen Wechselkontakt darstellt. Der Wechselkontakt schließt den Varistorkreis in bekannter Weise über eine Lotstelle. Wird das Schaltelement ausgelöst, wird ein weiterer Kontakt geschlossen, der entweder als interne oder externe Defektanzeige oder eben über eine entsprechende externe Verbindung als Kurzschluss verschaltet werden kann.

Die DE 41 24 321 zeigt die Möglichkeit einer zusätzlichen Sicherung für den Fall auf, dass auch der nach Ausfall eines Varistors zugeschaltete redundante Varistor geschädigt ist. Diesbezüglich wird der redundante Varistor entweder durch Öffnen eines Schalters im Querstrompfad oder aber auch durch Öffnen des Schalters im Längsstrompfad von der Spannungsversorgung getrennt. Dabei erfolgt gleichzeitig eine Abtrennung des zu schützenden Systems vom Netz und ein Überspannungsschutz.

Insbesondere bei Photovoltaikanlagen ist aufgrund der Charakteristik der speisenden Quelle der dortige Betriebsstrom annähernd gleich dem Kurzschlussstrom. Ein klassisches Abtrennen bei Erwärmung eines Varistors mit Abtrennvorrichtung ist bei derartigen Gleichspannungsapplikationen nicht zielführend, da die Systemspannung von Photovoltaikanlagen bis zu 1000 Volt beträgt und die Unterbrechung von 1000 Volt-Gleichstromkreisen nur mit einem erheblichen konstruktiven und/oder apparativen Aufwand realisierbar ist.

Gemäß der DE 10 2007 051 854 A1 kann ein leitfähiges Element auch als Schalteinrichtung ausgebildet werden. Der durch die Schalteinrichtung im Kurzschlussfall gebildete Bypass ist nicht auf Dauerstromtragfähigkeit ausgelegt. Nachdem über eine gewisse Zeit der Fehlerstrom geflossen ist, erfolgt eine Abschaltung des Bypasses. Diesbezüglich kann das leitfähige Element als Sicherung ausgebildet sein. Der bei der Öffnung der thermischen Abtrennvorrichtung entstehende Lichtbogen soll von den Kontaktelementen geführt werden und selbständig verlöschen, und zwar spätestens bei Erreichen des Kurzschlusskontaktes. Unmittelbar nach Erreichen des Kurzschlusskontaktes verlischt dann der Bogen und es fließt ein Strom über den dortigen Bypass, der zum Beispiel eine Sicherung enthält.

Es hat sich jedoch gezeigt, dass bei der Umschaltung ein undefinierter Übergangsbereich vorliegt, bei dem das bewegliche Teil der Abtrennvorrichtung bereits den Überspannungsableiter verlassen hat, jedoch noch nicht mit dem Schaltelement, zum Beispiel einer Sicherung, in Kontakt gelangt ist. In diesem Übergangsbereich brennt ein Lichtbogen, der für den Betrieb einer entsprechenden Vorrichtung nachteilig sein kann.

Weitere Abtrenn- und Umschaltvorrichtungen sind aus JP 2014/155340 und US2005/280971 bekannt.

Die WO 2014/131564 A1 zeigt eine gattungsgemäße Abtrenn- und Umschaltvorrichtung für den Überspannungsschutz.

Diese Abtrenn- und Umschaltvorrichtung stellt sicher, dass auch während des Abtrenn- und Umschaltvorganges im Zuge der mechanischen Bewegung des entsprechenden Leiterelementes keine unerwünschten Lichtbögen auftreten und damit die Betriebssicherheit einer diesbezüglichen Vorrichtung erhöht ist. Eine vollständige elektrische Abtrennung des jeweiligen Ableitelementes bezüglich des Anschlusspfades ist erst dann gegeben, wenn das bewegliche Leiterelement eine zweite Position, dort als Umschaltposition bezeichnet, erreicht hat. Durch diese Maßnahme ist sichergestellt, dass während des Bewegungswegs des Leiterelementes kein unerwünschter Lichtbogen auftritt.

Es hat sich jedoch gezeigt, dass die vorbekannte Abtrenn- und Umschaltvorrichtung nicht unter allen Umständen zufriedenstellend arbeitet. Probleme entstehen insbesondere dann, wenn alterungsbedingt eingesetzte Ableitelemente, zum Beispiel Metalloxidvaristoren, einer langsamen und schleichenden Erwärmung unterliegen und es letztendlich zum Lösen der thermischen Abtrennstelle kommt.

In einem solchen Fall ist keine eindeutige Ausschaltfunktion gegeben.

Die Lösung der Aufgabe der Erfindung erfolgt durch eine neuartige Abtrenn- und Umschaltvorrichtung gemäß Patentanspruch 1, wobei die Unteransprüche mindestens zweckmäßige Ausgestaltungen und Weiterbildungen umfassen.

Die erfindungsgemäße Abtrenn- und Umschaltvorrichtung gibt Betriebssicherheit bei Störströmen im Milliamperebereich ebenso wie bei Störströmen, die im Ampere- oder höheren Amperebereich liegen.

Der Umschaltvorgang auf eine Sicherung dient dabei der Übertragung der Ausschaltfunktion auf die Sicherung, wenn der Varistor als thermisches Ableitelement nicht mehr vollständig einsatzfähig ist und zum Beispiel Alterungsschäden unterliegt, die zu einem Lösen der thermischen Abtrennstelle geführt hat.

Nach Erreichen einer dritten Position durch das bewegliche Leiterelement liegt eine vollständige Netztrennung und ein sicherer Zustand (Fail-safe) vor.

Die Erfindung ist insbesondere vorteilhaft in DC-Systemen anwendbar, aber grundsätzlich auch für Wechselstromanwendungen, das heißt AC-Systeme, geeignet.

Die Erfindung geht also von einer Abtrenn- und Umschaltvorrichtung für den Überspannungsschutz mit mindestens einem Ableitelement, insbesondere einem Varistor sowie weiterhin von einer thermischen Abtrennstelle aus. Die thermische Abtrennstelle ist in den elektrischen Anschlusspfad des Ableitelementes eingebunden, wobei die thermische Abtrennstelle ein bewegliches Leiterelement umfasst. Dieses bewegliche Leiterelement kann unter mechanischer Vorspannung stehend einen definierten Weg zurücklegen.

Insbesondere wirkt die mechanische Vorspannung dahingehend, dass sich im Abtrennfall das bewegliche Leiterelement zunächst von einer ersten Position in eine zweite Position bewegt, wobei mit Erreichen der zweiten Position eine elektrische Umschaltung auf eine Sicherung bewirkt ist.

Die thermische Abtrennstelle wird hierbei durch das bewegliche Leiterelement und ein festes Kontaktelement gebildet, wobei das bewegliche Leiterelement am festen Kontaktelement durch ein thermisch auslösbares Mittel, zum Beispiel ein Lot, fixiert ist.

Erfindungsgemäß ist eine vollständige elektrische Abtrennung des Ableitelementes bezüglich des Anschlusspfades erst dann gegeben, wenn das bewegliche Leiterelement über die zweite Position hinausgelangt ist und eine dritte Position erreicht hat, wobei die Sicherung in Reihe zum Ableitelement liegt und das bewegliche Leiterelement als Wischer oder schleifender Kontakt bezogen auf die zweite Position ausgebildet ist, wobei die zweite Position durch einen Bypass-Endpunkt realisiert wird.

Ausgestaltend berührt der bewegliche Leiterabschnitt beim Erreichen der zweiten Position den Bypass-Endpunkt unmittelbar, so dass der entsprechende Pol der Sicherung für einen Übergangsmoment kontaktiert ist.

Bei einer Ausführungsform der Erfindung berührt der bewegliche Leiterabschnitt beim Erreichen der zweiten Position den Bypass-Endpunkt nicht.

Vielmehr bildet sich ein Lichtbogen aus, der dann die Sicherung zum Ansprechen bringt. Die Berührung ist also hier quasi mittelbar durch den entstehenden Lichtbogen realisiert.

Ein primär entstehender Lichtbogen beim Öffnen der thermischen Abtrennstelle verlischt spätestens beim Erreichen der zweiten Position des beweglichen Leiterelementes.

In Weiterbildung der Erfindung ist ein erster Sicherungspol mit einem Anschluss des Ableitelementes verbunden und es steht ein zweiter Sicherungspol mit dem Bypass-Endpunkt in Verbindung oder ist Bestandteil dieses Bypass-Endpunktes.

Der gezogene primäre Lichtbogen bei Bewegen des Leiterelementes von der ersten in die zweite Position stellt quasi ein Entladungselement dar. Wird die zweite Position erreicht, kann bei ausreichenden Strömen die Sicherung zum Ansprechen gebracht werden. Dabei kann eine unmittelbare elektrische Kontaktierung aber auch eine mittelbare Kontaktierung durch einen zweiten, quasi Sekundär-Lichtbogen erfolgen.

Mit dem Erreichen der dritten Position liegt die gewünschte vollständige Abtrennung, das heißt Netztrennung, vor.

Bevorzugt kann das bewegliche Leiterelement eine Verschwenkbewegung ausführen und bei dieser Verschwenkbewegung von der ersten über die zweite in die dritte Position gelangen. Selbstverständlich ist alternativ auch eine Linearbewegung möglich.

Die Sicherung, welche in Reihe zum Ableitelement liegt, befindet sich quasi parallel zum Öffner, gebildet durch die thermische Abtrennstelle.

Die Erfindung soll nachstehend anhand von Ausführungsbeispielen sowie unter Zuhilfenahme von Figuren näher erläutert werden.

Hierbei zeigen:

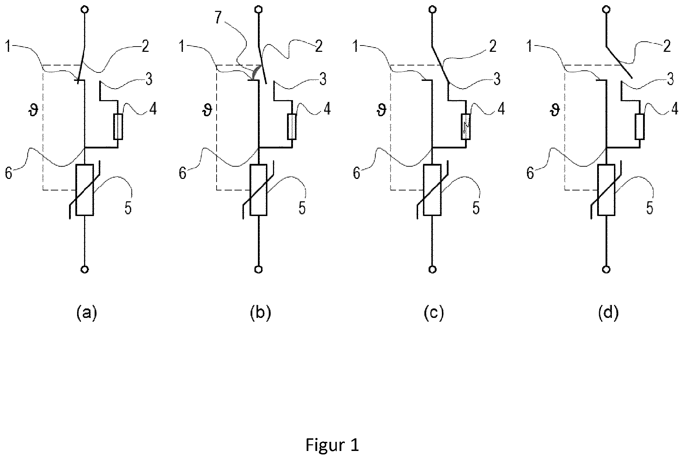

- Fig. 1a-d: eine erste Ausführungsform der erfindungsgemäßen Abtrenn- und Umschaltvorrichtung, umfassend einen Metalloxidvaristor mit in Reihe geschalteter Sicherung sowie einer thermischen Abtrennstelle, wobei ein bewegliches Leiterelement im Abtrennfall von einer ersten Position (Fig. a) über einen Bewegungsablauf (Fig. b) in eine zweite Position (Fig. c) gelangt und hierbei unmittelbar einen Bypass-Endpunkt kontaktiert und im Anschluss gemäß Fig. 1d die vollständige Abtrennposition erreicht ist;

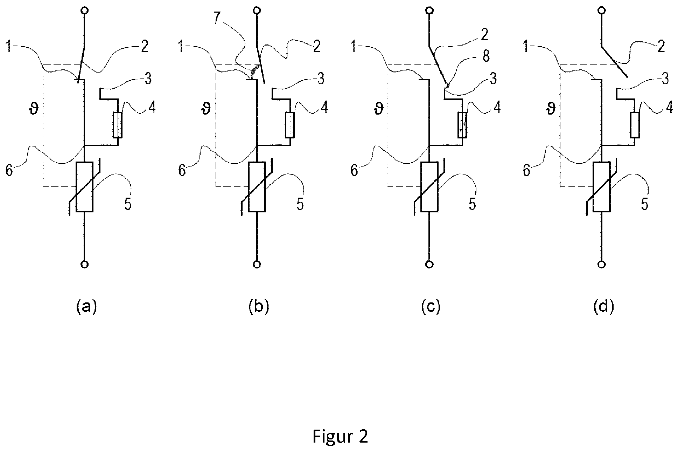

- Fig. 2a-d: eine Ausführungsform mit nicht unmittelbar kontaktierten Bypass-Endpunkt, sondern vielmehr einer mittelbaren Kontaktierung durch einen Sekundär-Lichtbogen (Bezugszeichen 8 nach Fig. 2c), wobei ansonsten die Abfolge analog derjenigen wie anhand der Fig. 1 geschildert ist;

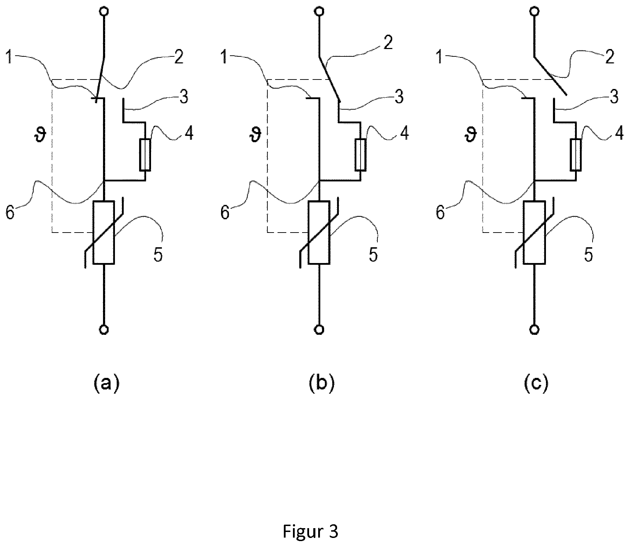

- Fig. 3a-c: eine Ausführungsform der Erfindung als Prinzipschaltbild mit lichtbogenfreiem Abtrennvorgang bei fließenden Strömen im Milliamperebereich mit Bewegungsablauf über die zweite Position (Fig. 3b) bis hin zum vollständigen Abtrennen (Fig. 3c); und

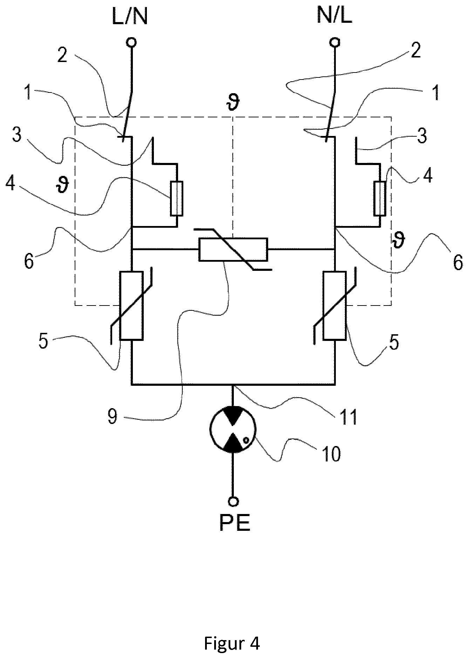

- Fig. 4: ein Blockschaltbild einer einphasigen Überspannungsschutzvorrichtung mit thermischem Ableitelement und beweglichen Leiterelementen, wobei in der Fig. 4 nur die Ausgangssituation mit geschlossener Abtrennstelle dargestellt ist, jedoch im Überspannungsfall eine Funktion ähnlich derjenigen nach den Fig. 1 - 3 realisierbar ist.

Den Fig. 1 - 4 ist zunächst gemeinsam die Reihenschaltung mindestens eines Ableitelementes 5 und einer thermischen Abtrennstelle 1, wobei die thermische Abtrennstelle 1 ein bewegliches Leiterelement 2 aufweist.

Dem Ableitelement, zum Beispiel einem Metalloxidvaristor, ist eine Sicherung 4 parallelgeschalten. Ein erster Sicherungspol ist diesbezüglich mit dem Anschluss 6 des Ableitelementes 5 verbunden, wobei ein zweiter Sicherungspol mit einem Bypass-Endpunkt 3 in Verbindung steht oder Bestandteil dieses Endpunktes 3 ist.

Fig. 4 zeigt eine Ausbildung, die neben Ableitelementen 5 noch ein L-N Ableitelement 9 umfasst. Die Gruppe von Ableitelementen 5; 9 führt an einem Anschlusspunkt 11 auf einen Gasentladungsableiter 10, dessen anderer Pol an PE liegt.

Bei der Darstellung gemäß den Fig. 1a-d entsteht beim Ansprechen der thermischen Abtrennstelle 1 und beginnender Bewegung des beweglichen Leiterelementes 2 ein Primär-Lichtbogen 7. Bei fortdauernder quasi Wischbewegung des beweglichen Leiterelementes 2 in Richtung des Kontaktes 3, das heißt zum Bypass-Endpunkt, wird letztendlich der Bypass-Endpunkt 3 berührt und es fließt ein Strom über die Sicherung 4, welche schmilzt.

Mit Erreichen der Position nach Fig. 1d liegt eine vollständige Netztrennung vor.

Bei der nicht unmittelbar berührenden Kontaktgestaltung bezogen auf die zweite Position gemäß den Fig. 2a-d brennt ebenso beim Übergang von der ersten zur zweiten Position (Fig. 2a zu Fig. 2b) der primäre Lichtbogen 7 mit Annäherung des beweglichen Leiterelementes 2. Am festen Bypass-Endpunkt 3 brennt ein sekundärer Lichtbogen 8, der die Sicherung 4 gegebenenfalls zum Ansprechen bringt.

Mit fortschreitender Bewegung des Leiterelementes 2 wird die Position nach Fig. 2d und damit eine vollständige Netztrennung erreicht.

Ein ähnlicher Ablauf ergibt sich gemäß den Fig. 3a-c, hier jedoch ohne Ziehen eines Lichtbogens, da nur Ströme im Milliamperebereich fließen.

## Patentansprüche

1. Abtrenn- und Abschaltvorrichtung für den Überspannungsschutz, insbesondere für DC-Systeme mit mindestens einem Ableitelement, weiterhin einer thermischen Abtrennstelle (1), wobei die thermische Abtrennstelle (1) ein bewegliches Leiterelement (2) umfasst, welches unter einer mechanischen Vorspannung steht und sich im Abtrennfall von einer ersten Position in eine zweite Position bewegt, wobei mit Erreichen der zweiten Position eine elektrische Umschaltung auf eine Sicherung (4) bewirkt ist, die thermische Abtrennstelle (1) durch das bewegliche Leiterelement (2) und ein festes Kontaktelement gebildet ist, wobei das bewegliche Leiterelement (2) am festen Kontaktelement durch ein thermisch auslösbares Mittel fixiert ist,
**dadurch gekennzeichnet, dass**
eine vollständige elektrische Abtrennung des Ableitelementes (5) bezüglich des Anschlusspfades erst dann gegeben ist, wenn das bewegliche Leiterelement (2) über die zweite Position hinausgelangt ist und eine dritte Position erreicht hat, wobei die Sicherung (4) in Reihe zum Ableitelement (5) liegt und das bewegliche Leiterelement (2) als Wischer oder schleifender Kontakt bezogen auf die zweite Position ausgebildet ist, wobei die zweite Position durch einen Bypass-Endpunkt (3) realisiert ist.

2. Abtrenn- und Umschaltvorrichtung nach Anspruch 1,
**dadurch gekennzeichnet, dass**
das Ableitelement ein Varistor (5) ist.

3. Abtrenn- und Umschaltvorrichtung nach Anspruch 1 oder 2,
**dadurch gekennzeichnet, dass**
der bewegliche Leiterabschnitt (2) beim Erreichen der zweiten Position den Bypass-Endpunkt (3) unmittelbar berührt und somit der entsprechende Pol der Sicherung (4) für einen Übergangsmoment kontaktiert ist.

4. Vorrichtung nach Anspruch 1 oder 2,
**dadurch gekennzeichnet, dass**
der bewegliche Leiterabschnitt (2) beim Erreichen der zweiten Position den Bypass-Endpunkt (3) nicht berührt, jedoch einen Lichtbogen (8) zieht, welcher die Sicherung (4) zum Ansprechen bringt.

5. Abtrenn- und Umschaltvorrichtung nach einem der vorangegangenen Ansprüche,
**dadurch gekennzeichnet, dass**
ein entstehender Lichtbogen (7) beim Öffnen der thermischen Abtrennstelle (1) spätestens beim Erreichen der zweiten Position des beweglichen Leiterelementes (2) verlischt.

6. Abtrenn- und Umschaltvorrichtung nach einem der vorangegangenen Ansprüche,
**dadurch gekennzeichnet, dass** ein erster Sicherungspol mit einem Anschluss (6) des Ableitelementes (5) verbunden ist und ein zweiter Sicherungspol mit dem Bypass-Endpunkt (3) in Verbindung steht oder Bestandteil dieses Bypass-Endpunktes (3) ist.

## Claims

1. A disconnection and switch-over device for overvoltage protection, in particular for DC systems having at least one arresting element, moreover a thermal disconnection point (1), wherein the thermal disconnection point (1) comprises a movable conductor element (2) which is under mechanical pretension and moves in the event of disconnection from a first position into a second position, wherein, when the second position is reached, an electrical switch-over to a fuse (4) is effected, the thermal disconnection point (1) is formed by the movable conductor element (2) and a fixed contact element, wherein the movable conductor element (2) is fixed to the fixed contact element through a thermally triggerable means,
**characterized in that**
a complete electrical disconnection of the arresting element (5) with respect to the connection path is only given when the movable conductor element (2) has moved beyond the second position and reached a third position, wherein the fuse (4) is connected in series to the arresting elements (5), and the movable conductor element (2) is formed as a wiper or sliding contact with regard to the second position, wherein the second position is realized by a bypass end point (3).

2. The disconnection and switch-over device according to claim 1,
**characterized in that**
the arresting element is a varistor (5).

3. The disconnection and switch-over device according to claim 1 or 2,
**characterized in that**,
when the second position is reached, the movable conductor element (2) directly contacts the bypass end point (3), and thus the corresponding pole of the fuses (4) is contacted for a moment of transition.

4. The device according to claim 1 or 2,
**characterized in that**,
when the second position is reached, the movable conductor element (2) does not contact the bypass end point (3) but draws an electric arc (8) which causes the fuse (4) to respond.

5. The disconnection and switch-over device according to any one of the preceding claims,
**characterized in that**,
when the thermal disconnection point (1) opens, a generating electric arc (7) is extinguished at the latest when the second position of the movable conductor element (2) is reached.

6. The disconnection and switch-over device according to any one of the preceding claims,
**characterized in that**
a first fuse pole is connected to a terminal (6) of the arresting element (5), and a second fuse pole is in communication with the bypass end point (3) or is an integral part of said bypass end point (3).

## Revendications

1. Dispositif de déconnexion et de coupure pour la protection antisurtension, en particulier pour des systèmes à courant continu, comportant au moins un élément dérivateur, en outre un point de déconnexion thermique (1), le point de déconnexion thermique (1) comprenant un élément conducteur mobile (2) qui se trouve sous une précontrainte mécanique et qui, dans le cas d'une déconnexion, se déplace d'une première position jusque dans une seconde position, dans lequel
une commutation électrique vers un coupe-circuit (4) est assurée lorsqu'il atteint la seconde position,
le point de déconnexion thermique (1) est formé par l'élément conducteur mobile (2) et par un élément de contact fixe,
l'élément conducteur mobile (2) est fixé à l'élément de contact fixe par un moyen susceptible d'être déclenché par voie thermique,
**caractérisé en ce que**
une déconnexion électrique complète de l'élément dérivateur (5) par rapport au trajet de connexion existe uniquement quand l'élément conducteur mobile (5) se déplace au-delà de la seconde position et a atteint une troisième position, le coupe-circuit (4) se situant en série par rapport à l'élément dérivateur (5) et l'élément conducteur mobile (2) étant réalisé sous forme de contact à lèvre ou de contact glissant par rapport à la seconde position, la seconde position étant réalisée par un point d'extrémité de by-pass (3).

2. Dispositif de déconnexion et de commutation selon la revendication 1,
**caractérisé en ce que**
l'élément dérivateur est un varistor (5).

3. Dispositif de déconnexion et de commutation selon la revendication 1 ou 2,
**caractérisé en ce que**
lorsqu'il atteint la seconde position, l'élément conducteur mobile (2) touche directement le point d'extrémité de by-pass (3) et ainsi le pôle correspondant du coupe-circuit (4) est contacté pour un instant de transition.

4. Dispositif selon la revendication 1 ou 2,
**caractérisé en ce que**
lorsqu'il atteint la seconde position, l'élément conducteur mobile (2) ne touche pas le point d'extrémité de by-pass (3), mais engendre un arc électrique (8) qui fait réagir le coupe-circuit (4).

5. Dispositif de déconnexion et de commutation selon l'une des revendications précédentes,
**caractérisé en ce que**
un arc électrique (7) qui se forme est éteint lors de l'ouverture du point de déconnexion thermique (1), au plus tard lorsque la seconde position de l'élément conducteur mobile (2) est atteinte.

6. Dispositif de déconnexion et de commutation selon l'une des revendications précédentes,
**caractérisé en ce que**
un premier pôle de coupe-circuit est relié à une borne (6) de l'élément dérivateur (5), et un second pôle de coupe-circuit est en liaison avec le point d'extrémité de by-pass (3) ou fait partie dudit point d'extrémité de bypass (3).
